# FASCICULE DE BREVET EUROPEEN

(11) **EP 0 613 616 B1**
(45) Date de publication et mention de la délivrance du brevet: **24.06.1998**
(21) Numéro de dépôt: 94400447.2
(22) Date de dépôt: 02.03.1994
(51) Int. Cl.: A01D 45/00, A01D 45/26

(54) **Récolteuse de salade du genre mâche**
Erntemaschine für Feldsalat
Lettuce harvester

(30) Priorité: 04.03.1993 FR 9302664
(43) Date de publication de la demande: 07.09.1994
(73) Titulaire: ATELIERS DE CLAIRE FONTAINE S.A., F-44450 La Chapelle Basse Mer (FR)
(72) Inventeur: Boyeldieu, Luc, F-44000 Nantes (FR); Queru, Jean-François, F-44390 Petit Mars (FR)
(74) Mandataire: Michelet, Alain

(56) Documents cités:
- FR-A- 2 163 867
- FR-A- 2 408 997
- FR-A- 2 503 982
- FR-A- 2 694 999
- FR-E- 72 081
- US-A- 4 261 163
- US-A- 4 944 141

## Description

La présente invention a trait d'une récolteuse de salade du genre mâche, ou de végétaux du même type qui se récoltent de façon similaire.

Dans le domaine des cultures maraîchères, la mâche est généralement cultivée sur des planches longitudinales de terre, bordées par des passe-pieds et éventuellement recouvertes d'une couche de sable de quelques millimétres d'épaisseur. Les racines du végétal se développent dans la terre ; son pied s'étend à travers la couche de sable et son feuillage se développe à l'air libre.
Une fois le végétal arrivé à maturité, sa récolte s'effectue manuellement, à l'aide d'outils tranchants appropriés. Cette opération nécessite une main d'oeuvre importante ainsi qu'un coup de main précis et habitué pour ne pas nuire à la qualité de la récolte.

Dans des domaines voisins, il existe des machines qui sont adaptées pour effectuer un ramassage automatisé des produits cultivés. Le document FR-A-2 503 982 montre une récolteuse de légumes feuillus à fruits qui se développent à la surface du sol, ou à tubercules, après déterrage. Cette récolteuse est constituée d'un châssis principal automoteur qui est monté sur roues et qui porte un châssis secondaire, dit châssis cueilleur. Le châssis secondaire est muni d'un convoyeur sans fin qui s'enroule sur deux tambours et qui est disposé en aval d'une lame de coupe animée d'un mouvement alternatif transversal. Un mécanisme approprié permet d'assurer le réglage permanent du châssis cueilleur par rapport au sol de façon à positionner correctement la lame de coupe par rapport au végétal à récolter.
D'autre part, le document FR-A-2 163 867 décrit une machine à récolter les champignons dotée d'une lame de coupe associée à un tapis sans fin de reprise. Le transfert des produits de la lame de coupe vers le tapis sans fin s'effectue au moyen d'une rampe fixe associée à un dispositif de balayage.

De telles machines ne conviennent pas pour la récolte de la mâche.

L'invention a pour but de proposer une machine automatique adaptée pour la récolte de la mâche.

Cette récolteuse est du type constituée - d'un châssis principal, monté sur des organes de roulement et associé à des moyens qui permettent son déplacement le long de la planche de récolte, - et d'un châssis secondaire, dit châssis cueilleur, porté par le châssis principal.
Le châssis cueilleur est muni d'une lame de coupe qui est disposée sensiblement perpendiculairement à la direction d'avancement et qui est animée d'un mouvement alternatif transversal ; il supporte également un convoyeur sans fin dont le mouvement est parallèle à la direction d'avancement et qui est disposé juste en aval de la lame de coupe, sur toute la largeur de travail.
La récolteuse comporte également des moyens de réglage permanent du positionnement du châssis cueilleur par rapport au sol, de façon à positionner correctement la lame de coupe par rapport au pied du végétal à récolter.

Conformément à l'invention, le convoyeur en forme de tapis sans fin s'enroule sur un sabre, au niveau de son nez et sur un tambour motorisé, à l'arrière.
Ce sabre peut être constitué d'un rond ou demi-rond d'enroulement dont le diamètre est de l'ordre de 8 à 10 mm, associé à un plat de rigidification s'étendant vers l'arrière. Selon une forme de réalisation préférée, il est constitué d'une juxtaposition de ronds tournants, montés sur des paliers solidaires d'un profilé de rigidification qui s'étend vers l'arrière. Cette forme particulière définit un 〈〈sabre tournant〉〉 sur lequel roule le tapis sans fin, ce qui permet de limiter notablement l'usure de ce dernier.

Une telle machine, de conception très simple, assure une coupe parfaite du pied du végétal. En outre, la présence du convoyeur sans fin juste derrière la lame de coupe et sur toute la largeur de travail assure une reprise immédiate de la récolte, dans le sens de déplacement de la machine, sans brassage ni perturbation susceptible de nuire à la qualité du produit.

Selon une autre caractéristique, la récolteuse comporte un dispositif qui évite le déport latéral du tapis sans fin au cours de son entraînement. Dans un premier mode de réalisation, ce dispositif est actif sur le brin inférieur du tapis, juste derrière le sabre d'extrémité. Il est constitué d'une tige folle montée sur paliers, disposée sensiblement parallèlement audit sabre, sur toute la largeur du tapis sans fin. La position de cette tige est réglable latéralement, au niveau de ses paliers, selon une direction sensiblement perpendiculaire au plan du tapis. En jouant latéralement sur la position de cette tige, on agit sur la tension de la bande sans fin ; cette tension est adaptée pour éviter le déplacement latéral de la bande, en fonctionnement. Dans un autre mode de réalisation, qui peut être utilisé en combinaison avec le premier, on prévoit un tambour moteur muni de joues latérales en forme de disques ou de couronnes. Ces joues obligent le tapis sans fin à conserver une position correcte sur le châssis secondaire.

Selon une autre caractéristique, la récolteuse comporte un système de tension automatique du tapis sans fin. Ce système consiste en un cadre rigide en pivot sur le châssis secondaire ; ce cadre porte les paliers latéraux du tambour motorisé du tapis sans fin et il est assujetti à un dispositif de rappel élastique agencé pour tirer sur le tambour en vue de tendre le tapis.

Selon une autre caractéristique avantageuse, la lame de coupe comporte une bordure d'attaque tranchante et elle est munie d'ouvertures ou d'orifices susceptibles d'assurer l'évacuation des grains de sable, de la terre, ou plus généralement, de tout débris indésirable entraîné par le végétal.

Selon un mode de réalisation particulier, la section de la lame de coupe se présente sous la forme d'un arc de cercle ou d'un dièdre. Cette configuration permet de relever le nez du convoyeur sans fin et d'obtenir une garde au sol plus importante. La partie arrière de la lame sert de jonction entre la partie tranchante et le nez du convoyeur ; cette partie arrière comporte avantageusement des trous ou des ouvertures débouchantes pour le passage des grains de sable ou autres, lesdites ouvertures étant agencées pour empêcher le produit récolté de passer entre les deux éléments juxtaposés.

Selon une forme de réalisation préférée, la bordure de la lame de coupe qui est opposée au tranchant se présente sous la forme d'un peigne, avec une multitude d'ouvertures longitudinales débouchantes. Dans cette configuration, les secousses liées au mouvement transversal alternatif de la lame de coupe améliorent la séparation du sable et du produit que l'on désire récolter. En effet, la partie arrière de la lame agit comme une grille vibrante apte à décrocher le sable fixé par l'humidité du sol, notamment.

La lame de coupe est de préférence inclinée vers le bas, dans le sens d'avancement de la récolteuse. Cette inclinaison peut être de quelques degrés simplement ; elle peut également aller jusqu'à 20 ou 30 degrés par rapport à l'horizontale, en fonction du type de lame utilisée. D'autre part, on peut prévoir des moyens de réglage de la lame de coupe pour permettre de faire varier sa hauteur, son inclinaison et/ou sa distance par rapport au convoyeur.

Selon une autre caractéristique, la récolteuse comporte un châssis cueilleur solidaire du châssis principal par l'intermédiaire d'une rotule, à l'arrière, et de deux vérins latéraux, à l'avant.

Toujours selon l'invention, la machine comporte au moins une glissière verticale pour le guidage du châssis cueilleur, à l'avant, à proximité de l'un ou des deux vérins latéraux.

Selon une autre disposition de l'invention, le châssis principal est monté sur quatre roues destinées à évoluer de part et d'autre de la planche à récolter, éventuellement dans les passe-pieds latéraux. Les roues arrière peuvent être réglables en hauteur au moyen d'un système mécanique conventionnel, genre goupille ou clavette, par exemple ; les roues avant sont de préférence réglables en hauteur au moyen d'un vérin de sécurité connecté à un système de fin de course haut et bas relié au vérin latéral de jauge du châssis secondaire, disposé à proximité.

Selon une autre caractéristique, les moyens de réglage permanents du châssis cueilleur par rapport au sol consistent en un ou plusieurs palpeurs en forme de roue prévue juste devant la lame de coupe et évoluant au contact de la planche de végétal à récolter. Ce ou ces palpeurs sont associés chacun à un distributeur hydraulique à tiroir, en forme de valve régulatrice de débit, connectée aux vérins latéraux qui solidarisent le châssis principal et le châssis cueilleur, au niveau de leur partie avant.

Selon une autre caractéristique, la récolteuse comporte deux palpeurs associés chacun à un distributeur hydraulique à tiroir ; chaque distributeur commande l'un des vérins latéraux qui règlent le positionnement du châssis cueilleur par rapport au sol.

Selon une autre caractéristique, le ou les distributeurs hydrauliques associés au(x) palpeur(s) sont solidaires du châssis cueilleur et ils consistent en un corps muni d'une alimentation pression et d'une sortie retour, connectées à une pompe ou au système hydraulique de l'engin tracteur.
L'alimentation pression alimente en parallèle l'une des chambres du vérin double effet associé, et la sortie retour alimente en parallèle l'autre chambre dudit vérin. D'autre part, le corps de distributeur est muni d'un tiroir dont la position est réglée par le palpeur associé. Ce tiroir met en communication l'alimentation et la sortie du corps de distributeur et il règle le débit de fluide correspondant en fonction de sa position.

Mais l'invention sera encore illustrée, sans être aucunement limitée, par la description suivante d'un mode de réalisation particulier, donné à titre d'exemple et représenté sur les dessins annexés dans lesquels :
- la figure 1 est une vue de côté, en forme de schéma fonctionnel, de la récolteuse de mâche selon l'invention ;
- la figure 2 montre la récolteuse de face, toujours sous la forme d'un schéma fonctionnel ;
- la figure 3 est une vue de détail de l'attaque de la lame de coupe sur le végétal, associée au convoyeur sans fin juxtaposé ;
- la figure 4 est une vue partielle et tronquée, en perspective, d'une forme de réalisation avantageuse de l'extrémité avant du tapis sans fin ;
- la figure 5 est une vue de côté d'une autre forme possible de lame de coupe ;
- la figure 6 est une vue de face de la lame de coupe représentée sur la figure 5 ;
- la figure 7 est un schéma fonctionnel de principe du système de réglage de la position du châssis cueilleur par rapport au sol.

La récolteuse selon l'invention est particulièrement adaptée à la récolte de salade et notamment de mâche.

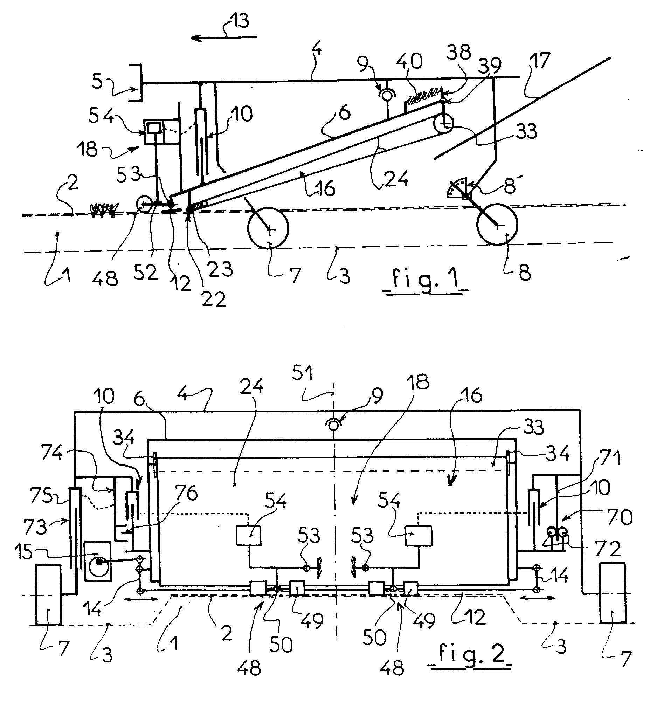

Comme on l'a représenté sur les figures 1 à 3, ces végétaux sont généralement cultivés sur des planches de terre longitudinales 1 qui peuvent être recouvertes d'une fine couche de sable 2 dont l'épaisseur est voisine de 5 mm, et qui sont bordées par des passe-pieds latéraux 3. La planche de terre 1 peut s'élever au-dessus des passe-pieds 3 d'une hauteur de l'ordre de 10 à 20 cm ; sa largeur est généralement de l'ordre de 1,2 à 2 m.

La récolteuse selon l'invention (figures 1 et 2) est constituée d'un châssis principal 4 muni de moyens d'attelage 5 à un véhicule tracteur, non représenté, et d'un châssis secondaire 6, appelé châssis cueilleur, porté par le châssis principal 4.

Le châssis principal 4 est monté sur des roues avant 7 et arrière 8 destinées à évoluer de part et d'autre de la planche 1 à récolter, dans les passe-pieds 3. Les roues avant 7 sont réglables en hauteur par des moyens qui seront décrits plus loin, notamment en fonction de la profondeur des passe-pieds 3 ; les roues arrière 8 sont également réglables en hauteur au moyen d'un dispositif mécanique classique 8', du genre à clavette ou goupille, par exemple. Les roues arrière 8' sont montées sur palonnier pour assurer la stabilité de l'ensemble.

Le châssis cueilleur 6 est suspendu au châssis principal 4 par l'intermédiaire d'une rotule centrale 9, à l'arrière, et au moyen de deux vérins de jauge latéraux 10, de préférence double effet, sur l'avant. Au niveau de cette extrémité avant, le châssis cueilleur 6 porte une lame de coupe 12 qui s'étend perpendiculairement à la direction d'avancement 13 et dont la longueur définit la largeur de travail. Cette largeur de travail est de préférence supérieure à la largeur de la planche 1 ; elle peut être voisine de 1,4 m pour une largeur de planche égale à 1,2 m.

La lame 12 est montée sur un jeu de bielles latérales 14 commandées par un moteur à excentrique 15 adapté pour lui conférer un mouvement alternatif transversal de va-et-vient apte à sectionner le pied des végétaux que l'on désire récolter. En fonction de la souplesse de la lame 12, il peut être avantageux de prévoir un système de tension qui permet d'assurer sa rigidité.

Immédiatement derrière la lame de coupe 12, on trouve un convoyeur 16, du type à bande sans fin, qui est porté par le châssis cueilleur 6 et qui s'étend sur toute la largeur de travail. Le mouvement du convoyeur 16 est parallèle à la direction d'avancement 13 et il est destiné à transférer le végétal depuis la lame de coupe 12 jusqu'à l'arrière de la récolteuse où il sera directement mis en caisse ou bien repris par un convoyeur intermédiaire 17. Ce convoyeur 17, en forme d'élévateur, peut être constitué d'un tapis à barreaux muni d'ameneurs à griffes régulièrement répartis.
Ainsi, immédiatement après sa coupe, le produit est pris en charge par un organe de convoyage, sans aucun déplacement intermédiaire ni brassage quelconque susceptible de le déranger et d'altérer sa qualité.

Pour compenser les irrégularités de la planche 1 et/ou des passe-pieds 3, susceptibles d'affecter la position de la lame de coupe 12 par rapport au pied du végétal à récolter, la récolteuse est pourvue de moyens de réglage permanents 18 du positionnement du châssis cueilleur 6 par rapport au sol. Ces moyens 18, qui seront détaillés plus loin, commandent les vérins latéraux 10 décrits ci-avant qui solidarisent le châssis principal 4 et le châssis cueilleur 6 au niveau de l'extrémité avant de ce dernier.

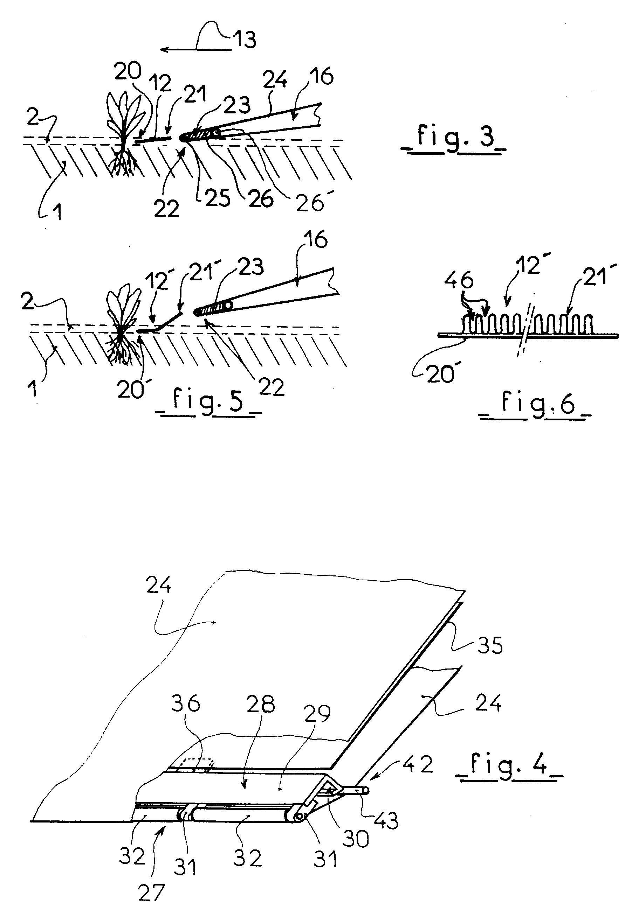

Comme on l'a représenté sur la figure 3, la lame de coupe 12 peut être constituée d'un plat métallique droit, en acier par exemple, dont la longueur est adaptée à la largeur de travail désirée et dont la largeur peut être de l'ordre de 3 à 5 cm. La bordure d'attaque 20 de la lame 12 est en forme de rasoir tranchant et sa bordure arrière 21 est immédiatement suivie du convoyeur sans fin 16.
Pour assurer la reprise immédiate des végétaux récoltés, la lame de coupe 12 est montée à l'extrémité du châssis cueilleur 6 avec des possibilités de réglage importantes en inclinaison, en hauteur, et par rapport à l'extrémité avant du convoyeur 16. Ces possibilités de réglage peuvent être obtenues au moyen de cales et par des systèmes de fixation à lumière oblongue ; ces différents moyens doivent permettre le réglage de la lame 12 dans un plan vertical parallèle à la direction d'avancement 13 de la machine.

Pour obtenir une coupe de qualité, le végétal doit être sectionné entre le feuillage qui s'étend à l'air libre et les racines qui se développent en terre, au niveau de son pied. Ce dernier s'étend dans la couche de sable 2 qui recouvre la planche de terre 1, et la lame 12 doit être positionnée en conséquence. De préférence, et telle qu'on l'a représentée sur les figures 1 et 3, la lame 12 est inclinée vers le bas, dans le sens d'avancement 13 de la machine ; cette inclinaison peut être de l'ordre de quelques degrés.

Pour assurer une reprise correcte du produit par le convoyeur 16, la bordure arrière 21 de la lame 12 se situe avantageusement sensiblement au niveau de l'axe d'enroulement avant dudit convoyeur. La distance qui sépare le nez 22 du convoyeur de la bordure arrière 21 de la lame doit être adaptée pour éviter la chute du produit récolté.
Dans une configuration de lame de coupe plane, disposée horizontalement ou inclinée seulement de quelques degrés par rapport à l'horizontale, il est indispensable que le nez 22 du convoyeur 16 soit le plus fin possible pour assurer une reprise efficace de la récolte et limiter l'encombrement vertical. En effet, comme on se situe en limite de terre, dans la couche de sable 2, on ne dispose pas d'une marge verticale importante.
A cet effet, l'avant du convoyeur 16 est équipé d'un sabre 23 autour duquel s'enroule la bande ou le tapis sans fin 24. Le sabre 23 est constitué d'un rond ou demi-rond 25 associé à un plat de rigidification 26 qui s'étend vers l'arrière. L'extrémité interne du plat 26 peut recevoir, en complément, un tube soudé 26' apte à améliorer la rigidité. Cet ensemble peut être réalisé de façon monobloc, en inox par exemple ; on peut également obtenir le sabre 23 par soudage du rond ou demi-rond 25 sur le chant du plat 26. Le rond ou demi-rond d'enroulement 25 a un diamètre le plus petit possible, de l'ordre de 8 à 10 mm par exemple ; il s'étend parallèlement à la lame de coupe 12.

On a représenté sur la figure 4, une autre forme de réalisation de la partie avant du convoyeur, en forme de "sabre tournant" 27.

Ce sabre 27 est constitué d'un profilé métallique 28, monobloc, constitué d'un plat 29 qui se prolonge par une boucle arrière 30. Le profilé 28 peut être obtenu en tôle d'acier pliée. La bordure avant du plat 29 reçoit des paliers 31, régulièrement répartis, destinés à la réception de tubes tournants juxtaposés 32. Pour une largeur de tapis de l'ordre de 1,2 m, on peut prévoir dix tubes juxtaposés ayant un diamètre extérieur de l'ordre de 10 mm et une longueur voisine de 11 cm. Les paliers 31 sont bien entendu compris dans l'encombrement des tubes 32 pour ne pas altérer l'enroulement extrême de la bande 24. Les tubes 32 sont montés fous sur les paliers 31 ; ils sont entraînés en rotation par la bande 24 et ils limitent considérablement les frottements et l'usure de la bande sans fin. Les tronçons de tubes juxtaposés 32 sont centrés sur le même axe ; la juxtaposition de tronçons permet de rigidifier la structure d'extrémité. Selon une caractéristique supplémentaire, les tubes 32 et les paliers porteurs 31 peuvent recevoir un axe de renfort monté à posteriori et qui s'étend sur toute la largeur de la bande sans fin 24. Cet axe peut avoir un diamètre de 4 mm environ, il est inséré dans la juxtaposition de tubes 32 et dans les paliers 31 ; le diamètre intérieur de ces éléments 31 et 32 est adapté à cet effet.

Sur l'arrière, la bande sans fin 24 s'enroule sur un tambour motorisé 33 dont l'axe de rotation s'étend parallèlement à la lame de coupe 12 (les moyens moteurs correspondants n'apparaissent pas sur les figures pour des raisons de simplification de représentation). Le tambour 33 est revêtu d'une pellicule de caoutchouc pour améliorer l'entraînement ; il peut être bombé dans sa partie centrale pour limiter le déport latéral de la bande sans fin 24.

La bande sans fin 24 a une nature adaptée pour permettre son enroulement sur le sabre 23, 27 et pour avoir une durée de vie satisfaisante, compatible avec une utilisation saisonnière importante de la machine. On peut par exemple utiliser un support constitué de deux plis tissés compacts en polyester, dont les faces supérieure et inférieure sont recouvertes ou imprégnées d'une matière plastique type polyuréthane.

Le brin supérieur de la bande 24 peut être associé à une sole de glissement 35, figure 4, solidarisée latéralement par boulonnage sur le châssis cueilleur 6. A l'avant, cette sole 35 peut avantageusement venir reposer sur un ou plusieurs taquets 36 soudés sur l'arrière de la boucle 30 du profilé 28.

Conformément à la représentation de la figure 1, la bande sans fin 24 peut être équipée d'un système assurant une tension automatique permanente.

Ce système est constitué d'un cadre rigide 38 solidaire du châssis cueilleur 6 par un pivot 39 sensiblement perpendiculaire à la direction d'avancement 13. Le cadre 38 porte les paliers latéraux du tambour motorisé 33 et il est assujetti à un dispositif de rappel élastique 40 en forme d'un ou de plusieurs ressorts spirales. Ces ressorts spirales 40 sont de préférence disposés de part et d'autre de l'axe médian de la bande 24 ; ils sont agencés pour tirer sur le cadre 38 en vue de maintenir une tension permanente sur les paliers du tambour 33 et, en conséquence, sur la bande sans fin 24. D'autre part, les paliers du tambour 33 sont montés sur le cadre 38 avec de légères possibilités de réglage de positionnement. On dispose ainsi d'une petite marge de manoeuvre pour positionner le tambour 33 rigoureusement perpendiculairement à l'axe médian du châssis cueilleur 6.

Sur la figure 4, on note également la présence d'un dispositif 42 de réglage de tension du tapis 24, actif sur le brin inférieur dudit tapis 24, juste derrière le sabre d'extrémité 27. Ce dispositif 42 est constitué d'une tige folle 43 montée sur des paliers latéraux non représentés. La tige 43 est disposée sensiblement parallèlement audit sabre 27, sur toute la largeur du tapis sans fin 24. Les paliers qui la supportent sont fixés sur le profilé 28 ou sur le châssis 6 par l'intermédiaire d'une vis qui permet de régler la position de la tige 43 selon une direction sensiblement perpendiculaire au plan du tapis 24.
La tige 43 applique une pression sur le brin inférieur du tapis 24 obligeant ce dernier à se dégager légèrement du profilé 28. Elle évite le frottement de la bande 24 sur le profilé 28 ; le tapis 24 est dévié et roule sur la tige folle 43 évitant ainsi son usure prématurée. D'autre part, le réglage latéral de la position de la tige 43 permet de compenser les défauts intrinsèques à la bande 24 susceptibles de provoquer son déplacement latéral par rapport au sabre d'extrémité et à son tambour motorisé. Ce réglage est effectué en usine, à l'oeil, en fonction des variations de positionnement du tapis 24, lors des essais.

Indépendamment ou en combinaison avec cette disposition particulière, on peut prévoir d'adapter des disques ou des couronnes 34 aux extrémités du tambour moteur 33. Ces éléments en forme de joues 34, visibles figure 2, ont pour rôle de supprimer les possibilités de déport latéral du tapis 24 ; le tambour 33 peut alors consister en un simple tambour moteur cylindrique, sans partie bombée centrale.

Pour optimiser la qualité de la récolte et notamment pour limiter la présence de terre, de débris ou de grains de sable avec le produit récolté, on peut prévoir d'utiliser une lame de coupe munie d'orifices ou d'ouvertures débouchantes au niveau de sa bordure arrière 21. Une telle structure, en forme de peigne par exemple, présente l'avantage de favoriser l'élimination du sable, de la terre ou des autres débris indésirables entraînés lors de la récolte, en liaison avec l'effet de secousse du mouvement alternatif de la lame.

Dans ce cas, la largeur de la lame de coupe peut être plus importante et on peut prévoir de l'incliner plus sérieusement, d'un angle de l'ordre de 10 à 30° par exemple, par rapport à l'horizontale. Cette inclinaison augmente la possibilité de garde au sol du nez 22 du convoyeur et le sabre avant peut ainsi être remplacé par un petit tambour, de diamètre voisin de 30 mm par exemple.

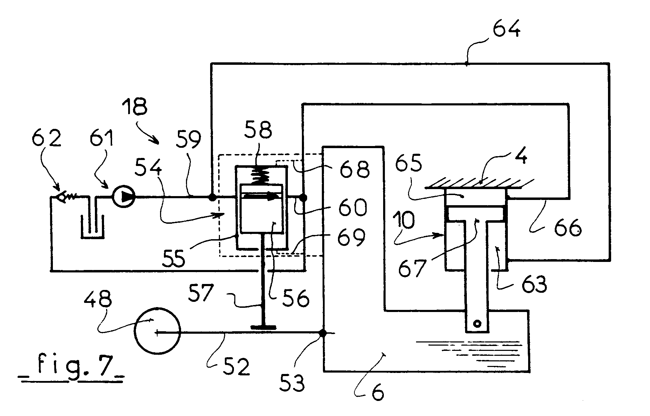

Une autre forme de réalisation possible de lame de coupe a été représentée sur les figures 5 et 6.
La section de cette lame 12' a une forme en arc de cercle ou en dièdre. Sa bordure d'attaque 20' est inclinée de quelques degrés par rapport à l'horizontale, dans le sens d'avancement 13, et sa bordure arrière 21', qui est relevée vers le sabre 23 du convoyeur 16, se présente sous la forme d'un peigne (figure 6) muni d'une multitude d'ouvertures longitudinales débouchantes 46. Les ouvertures arrière 46 sont adaptées pour laisser passer la terre ou les grains de sable susceptibles d'être entraînés lors de la coupe du végétal ; elles ne permettent pas le passage du végétal qui, poussé par le feuillage en cours de coupe est dirigé vers le nez 22 du convoyeur.

L'angle formé par les parties avant 20' et arrière 21' de la lame 12' peut être de l'ordre de 160°. Une telle structure permet de positionner le nez 22 du convoyeur 16 un peu plus haut que le bord d'attaque 20' de la lame de coupe. La distance ainsi créée facilite l'élimination des débris et ne gêne aucunement le transfert du produit récolté, grâce aux griffes du peigne qui séparent les ouvertures 46 précitées. Comme on l'a précisé ci-avant, cette distance augmente la possibilité de garde au sol du nez 22 du convoyeur et ce dernier peut être formé par un petit tambour, de diamètre voisin de 30 mm par exemple.

Pour obtenir une récolte de qualité, il est indispensable de sectionner le pied du végétal à un niveau très précis. La précision du niveau de coupe est de l'ordre de 0,5 mm et l'installation doit être équipée de moyens de réglage permanents du châssis cueilleur 6 et en particulier de la lame de coupe 12, 12', par rapport au sol, pour absorber les irrégularités de la planche de culture 1 ou des passe-pieds 3 sur lesquels évoluent les roues 7 et 8 de la récolteuse et les roues du véhicule tracteur. Ces moyens de réglage, désignés généralement sous la référence 18, sont visibles sur les figures 1 et 2 et détaillés sur la figure 7. Ils consistent en deux palpeurs 48 constitués chacun de deux roues 49 montées sur un palonnier horizontal articulé en 50. Les palpeurs 48 sont disposés juste devant la lame de coupe 12, 12', de part et d'autre de l'axe médian vertical 51 de la récolteuse, et évoluant au contact de la planche de terre 1, sur les végétaux à récolter. Ces palpeurs 48 sont solidaires du châssis cueilleur 6 par l'intermédiaire d'un bras 52 monté sur un axe horizontal 53.

Chaque palpeur 48 est associé à un distributeur hydraulique à tiroir 54, en forme de valve régulatrice de débit, connecté chacun à l'un des vérins latéraux 10 double effet.

Les distributeurs hydrauliques à tiroir 54 sont solidaires du châssis cueilleur 6. Ils consistent en un corps de distributeur 55 renfermant un tiroir 56 dont la position dans ledit corps 55 est commandée par une tige poussoir 57. Le poussoir 57 vient reposer sur le bras articulé 52 qui relie le palpeur 48 au châssis 6, ou sur un support monté sur ce bras 52.
On comprend, dès lors, que la position du tiroir 56 dans le corps de distributeur 55 est fonction des mouvements du palpeur 48. D'autre part, le tiroir 56 est assujetti à un ressort de compression 58 qui applique une pression adaptée sur l'ensemble de façon à positionner convenablement lesdits éléments les uns par rapport aux autres, en permanence.

Le corps de distributeur 55 est muni d'une alimentation pression 59 et d'une sortie retour 60 de fluide. Une pompe hydraulique 61 alimente le système; cette pompe 61 peut être celle du système hydraulique de l'engin tracteur ou bien consister en un organe rapporté solidarisé au châssis de la récolteuse. Dans tous les cas, on prévoit de préférence un clapet de charge 62 (deux bars) sur le circuit retour.

L'alimentation en fluide 59 alimente en parallèle la chambre 63 du vérin 10, par l'intermédiaire de la tubulure 64. D'autre part, la sortie retour 60 alimente en parallèle l'autre chambre 65 du vérin 10, par l'intermédiaire de la tubulure 66.

A l'intérieur du corps de distributeur 55, le tiroir 56 met en communication l'alimentation 59 et la sortie 60, et sa position règle le débit du fluide.

En fonctionnement, la pompe 61 propulse le fluide dans le circuit avec un débit régulier.

A l'équilibre, lorsque le palpeur 48 reste à un niveau constant, le distributeur 56 est seulement légèrement ouvert. Pour conserver dans la chambre 63 du vérin 10 la pression qui est nécessaire au maintien de la charge mécanique engendrée par le poids du ceuilleur, tout le débit de la pompe 61 est dirigé vers la sortie 60. A ce moment, la pression est la même dans la tubulure 59 et la chambre 63 du vérin 10 ; ainsi le vérin ne bouge pas. Dans cette position d'équilibre, la lame 12, 12' a une position de coupe correcte.

Si le palpeur 48 descend, par suite d'un trou dans la planche de culture 1 ou d'une bosse dans le passe-pied 3, le tiroir 56 s'abaisse légèrement et il s'ouvre un peu plus, donnant la possibilité d'un débit plus important entre l'alimentation 59 et la sortie 60. Ce phénomène entraîne une baisse de la pression au niveau de l'alimentation 59 et donc une baisse de la pression dans la chambre 63 du vérin 10. Une certaine quantité d'huile sort de la chambre 63 du vérin, ce qui provoque l'abaissement du piston 67. La lame de coupe est entraînée vers le bas jusqu'au retour à une nouvelle position d'équilibre.

En position de niveau montant, en cas de bosses sur la planche de culture 1 ou de creux dans le passe-pied 3, le tiroir 56 limite le débit de fluide par son élévation dans le corps de distributeur 55. La pression du fluide au niveau de l'alimentation 59 augmente, ce qui provoque une arrivée supplémentaire d'huile dans la chambre 63 du vérin. Ce phénomène entraîne une remontée du piston 67 et une élévation du châssis cueilleur 6 et de la lame de coupe associée, jusqu'au retour à une nouvelle position d'équilibre.

On obtient ainsi une autorégulation permanente quasi immédiate et très fine.

A noter la présence de drainages 68 et 69 sur le corps de distributeur 55, liés à la lubrification du tiroir 56, notamment.

Comme on l'a indiqué précédemment, la récolteuse présentée sur les figures 1 et 2 comporte deux systèmes de réglage 18, indépendants, de part et d'autre du plan médian 51. Cette caractéristique permet de mieux gérer les anomalies de planéité et de n'affecter les problèmes locaux qu'à la zone de lame concernée.

Pour éliminer les mouvements anarchiques, notamment transversaux, du châssis cueilleur 6 par rapport au châssis principal 4, on a prévu des moyens de guidage vertical 70, en forme de glissière, à proximité de l'un au moins des vérins de jauge 10. Ces moyens consistent en une coulisse verticale 71 solidaire du châssis principal 4 et qui coopère avec deux galets 72 montés sur le châssis cueilleur 6.

La récolteuse selon l'invention comporte également un dispositif de réglage de la hauteur des roues avant 7 qui fait office de sécurité aux différences importantes de profondeur des passe-pieds, dans le cas où les vérins 10 assujettis aux palpeurs 48 arrivent en bout de course (position haute ou basse).

Ce dispositif 73 est prévu au niveau des deux roues avant 7 ; sur la figure 2, il n'a été représenté que sur la partie gauche de la récolteuse pour des raisons de simplification de représentation.

Ce dispositif de réglage et de sécurité 73 est constitué d'un système 74 de fin de course électrique haut et bas associé à chaque vérin de jauge 10 du châssis cueilleur 6. Ce système de fin de course 74 est connecté à un vérin hydraulique 75 qui règle la hauteur de la roue 7 et il est associé à une butée 76 solidaire de la tige du vérin 10.

Le système de fin de course 74 est adapté pour agir sur le vérin 75 dès le contact avec la butée 76, c'est-à-dire juste avant la fin de course haute ou basse du vérin 10. A proximité de la fin de course basse, on agit pour relever le châssis 4 et à proximité de la fin de course haute, on agit pour l'abaisser.
Ce dispositif de sécurité permet de limiter les perturbations de la coupe en cas de présence de buttes ou de trous dans les passe-pieds 3.

Sur une récolteuse de ce type, on peut également prévoir un réglage de la position en hauteur du distributeur 54 afin de régler finement la hauteur de coupe. Ce réglage peut être obtenu au moyen d'une vis commandée manuellement ou électriquement.

D'autre part, juste devant la lame de coupe, sur les côtés du tapis 24, on peut prévoir des disques latéraux légèrement inclinés, adaptés pour dégager les mottes de terre indésirables et éviter leur contact avec la lame 12, 12', et/ou ses paliers latéraux. A proximité, encore, on prévoira avantageusement des guides latéraux, solidaires de la lame 12, 12' ou du châssis secondaire 6, pour éviter le déport latéral du produit coupé.

La récolteuse selon l'invention est de conception très simple et elle est susceptible de récolter automatiquement la mâche ou tout autre produit du même type, à des cadences très élevées (800 m/heure) et avec une qualité de coupe très satisfaisante. Une telle machine peut être utilisée sur des planches de cultures maraîchères ou même en plein champ, selon le cas. Comme on l'a représenté sur les figures, elle peut être déplacée par un engin tracteur selon d'autres modes de réalisation, on pourra prévoir une machine ayant ses propres moyens de motorisation.

## Revendications

1. Récolteuse de salade du genre mâche, par exemple, constituée :
- d'un châssis principal (4) monté sur des organes de roulement (7, 8) et associé à des moyens qui permettent son déplacement le long de la planche de récolte (1),
- d'un châssis secondaire (6), dit châssis cueilleur, porté par le châssis principal (4), lequel châssis cueilleur (6) est muni d'une lame de coupe (12, 12') qui est disposée sensiblement perpendiculairement à la direction d'avancement (13) et qui est animée d'un mouvement alternatif transversal,
- d'un convoyeur sans fin (16) constitué d'un tapis sans fin (24) qui s'enroule sur un sabre (23, 27) au niveau de son nez (22), juste derrière la lame de coupe (12, 12'), et sur un tambour motorisé (33), à l'arrière et qui s'étend, sur toute la largeur de travail,
- et de moyens (18) de réglage permanent du positionnement du châssis cueilleur (6) par rapport au sol (1) pour positionner correctement la lame de coupe (12, 12') par rapport au pied du végétal à récolter.

2. Récolteuse selon la revendication 1, caractérisée en ce qu'elle comporte un sabre (23) constitué d'un rond ou demi-rond d'enroulement (25) dont le diamètre est de l'ordre de 8 à 10 mm, associé à un plat de rigidification (26) s'étendant vers l'arrière.

3. Récolteuse selon l'une quelconque des revendications 1 ou 2, caractérisée en ce qu'elle comporte un sabre (27) constitué d'une juxtaposition de ronds tournants (32) montés sur des paliers (31) solidaires d'un profilé de rigidification (28) s'étendant vers l'arrière.

4. Récolteuse selon l'une quelconque des revendications 1 à 3, caractérisée en ce qu'elle comporte un dispositif (42) qui évite le déport latéral du tapis (24), actif sur le brin inférieur dudit tapis (24), juste derrière le sabre d'extrémité (23, 27), lequel dispositif (42) est constitué d'une tige folle (43) montée sur paliers, disposée sensiblement parallèlement audit sabre (23, 27), sur toute la largeur du tapis sans fin (24), la position de ladite tige (43) étant réglable latéralement, au niveau de ses paliers, selon une direction sensiblement perpendiculaire au plan du tapis (24).

5. Récolteuse selon l'une quelconque des revendications 1 à 4, caractérisée en ce qu'elle comporte un tambour moteur (33) muni de joues latérales (34) en forme de disques ou de couronnes, agencées pour guider le tapis sans fin (24) et l'obliger à conserver une position correcte, centré sur le châssis secondaire (6).

6. Récolteuse selon l'une quelconque des revendications 1 à 5, caractérisée en ce qu'elle comporte un système de tension automatique du tapis sans fin (24), lequel système consiste en un cadre rigide (38) en pivot sur le châssis secondaire (6), lequel cadre (38) porte les paliers latéraux du tambour motorisé (33) et est assujetti à un dispositif de rappel élastique (40) agencé pour tirer sur le tambour (33) en vue de tendre la bande (24).

7. Récolteuse selon l'une quelconque des revendications 1 à 6, caractérisée en ce qu'elle comporte une lame de coupe (12, 12') dont la bordure d'attaque (20, 20') est tranchante et qui est munie d'ouvertures ou d'orifices (46).

8. Récolteuse selon la revendication 7, caractérisée en ce qu'elle comporte une lame de coupe (12, 12') dont la bordure (21, 21') opposée au tranchant (20, 20') se présente sous la forme d'un peigne avec une multitude d'ouvertures longitudinales débouchantes (46).

9. Récolteuse selon l'une quelconque des revendications 7 ou 8, caractérisée en ce qu'elle comporte une lame de coupe (12') à section en arc de cercle ou en dièdre.

10. Récolteuse selon l'une quelconque des revendications 1 à 9, caractérisée en ce qu'elle comporte un châssis cueilleur (6) solidaire du châssis principal (4) par l'intérmédiaire d'une rotule (9), à l'arrière, et de deux vérins latéraux (10) à l'avant.

11. Récolteuse selon l'une quelconque des revendications 1 à 10, caractérisée en ce qu'elle comporte au moins une glissière verticale (70), pour le guidage du châssis cueilleur (6), à proximité du ou des vérins latéraux (10).

12. Récolteuse selon l'une quelconque des revendications 1 à 11, caractérisée en ce qu'elle comporte un châssis principal (4) monté sur quatre roues (7, 8) destinées à évoluer de part et d'autre de la planche à récolter, éventuellement dans les passe-pieds latéraux (3).

13. Récolteuse selon la revendication 12, caractérisée en ce qu'elle comporte des roues avant (7) réglables en hauteur au moyen d'un vérin de sécurité (75) connecté à un système de fin de course (74) haut et bas, relié au vérin latéral de jauge (10) du châssis secondaire (6) disposé à proximité.

14. Récolteuse selon l'une quelconque des revendications 1 à 13, caractérisée en ce que les moyens de réglage permanent du châssis cueilleur (6) consistent en un ou plusieurs palpeurs (48) en forme de roue prévue juste devant la lame de coupe (12, 12') et évoluant au contact de la planche à récolter, lesquels palpeurs (48) sont associés chacun à un distributeur hydraulique à tiroir (54), en forme de valve régulatrice de débit, connectée aux vérins (10) qui solidarisent le châssis principal (4) et le châssis cueilleur (6) au niveau de leur partie avant.

15. Récolteuse selon la revendication 14, caractérisée en ce qu'elle comporte deux palpeurs (48) associés chacun à un distributeur hydraulique à tiroir (54) commandant chacun l'un des vérins latéraux (10).

16. Récolteuse selon l'une quelconque des revendications 14 ou 15, caractérisée en ce que les distributeurs hydrauliques à tiroir (54) associés au(x) palpeurs(s) (48) sont solidaires du châssis cueilleur (6) et consistent en un corps (55) muni d'une alimentation pression (59) et d'une sortie retour (60) connectées à une pompe (61) ou au système hydraulique de l'engin tracteur, ladite alimentation (59) alimentant en parallèle l'une des chambres (63) du vérin double effet (10) associé, et ladite sortie (60) alimentant en parallèle l'autre chambre (65) dudit vérin (10), le corps du distributeur (55) étant muni d'un tiroir (56) dont la position est réglée par le palpeur (48) associé, lequel tiroir (56) met en communication l'alimentation (59) et la sortie (60) du corps de distributeur (55) et règle le débit de fluide en fonction de sa position.

## Claims

1. A salad harvester, of the type of corn, salad, for example, consisting of the following elements:
- a main chassis (4) mounted on rolling members (7, 8) and associated with means enabling its movement along the harvest board (1),
- a secondary chassis (6), so-called picking-up chassis, carried by the main chassis (4), whereas the said picking-up chassis (6) is fitted with a cutting blade (12, 12') arranged more or less perpendicular to the forward direction (13) and which is driven by an alternate transversal movement,
- an endless conveyor (16), comprising an endless belt (24) winding around a sabre (23, 27) at the level of its nose (22), just behind the cutting blade (12, 12') and on a motorised drum (33) at the rear, and extending over the whole working length,
- and means (18) for permanent position adjustment of the picking-up chassis (6) with respect to the ground (1) for correct positioning of the cutting blade (12, 12') with respect to the foot of the vegetable to be harvested.

2. A harvester according to claim 1, characterised in that it comprises a sabre (23) composed of a winding circle or semi-circle (25) whose diameter ranges from 8 to 10 mm, associated with a stiffening flat (26) extending backwards.

3. A harvester according to any of claims 1 or 2, characterised in that it comprises a sabre (27) composed of juxtaposed revolving circles (32) mounted on bearings (31) interconnected with a stiffening profile (28) extending backwards.

4. A harvester according to any of the claims 1 to 3, characterised in that it comprises a device (42) preventing side offset of the belt (24), active on the lower edge of the said belt (24), just behind the end sabre (23, 27), whereas the said device (42) is made of an idle stem (43) mounted on bearings, arranged more or less parallel to the said sabre (23, 27), over the whole length of the endless belt (24), whereby the position of the said stem (43) is adjustable laterally, at the level of its bearings, along a direction more or less perpendicular to the belt plane (24).

5. A harvester according to any of the claims 1 to 4, characterised in that it comprises a motorised drum (33) fitted with side cheeks (34) shaped as disks or crowns, arranged to guide the endless belt (24) and to force it to maintain a correct position, centred on the secondary chassis (6).

6. A harvester according to any of the claims 1 to 5, characterised in that it comprises an automatic tensioning system of the endless belt (24), whereas the said system consists of a stiff frame (38) pivoting on the secondary chassis (6), whereas the said frame (38) carries the lateral bearings of the motorised drum (33) and is controlled by an elastic recall device (40) provided or pulling on the drum (33) in order to stretch the belt (24).

7. A harvester according to any of the claims 1 to 6, characterised in that it comprises a cutting blade (12, 12') whose leading border (20, 20') is sharp and which is fitted with openings or orifices (46).

8. A harvester according to claim 7, characterised in that it comprises a cutting blade (12, 12') whose border (21, 21') opposite the sharp edge (20, 20') looks like a comb with a large number of longitudinal end openings (46).

9. A harvester according to any of the claims 7 or 8, characterised in that it comprises a cutting blade (12') shaped as an arc of a circle or as a dyhedron.

10. A harvester according to any of the claims 1 to 9, characterised in that it comprises a picking-up chassis (6) interconnected with the main chassis (4) via a joint (9), at the rear, and via two lateral jacks (10) at the front.

11. A harvester according to any of the claims 1 to 10, characterised in that it comprises at least one vertical slide (70), for guiding the picking-up chassis (6), in the vicinity of the lateral jack(s) (10).

12. A harvester according to any of the claims 1 to 11, characterised in that it comprises a main chassis (4) mounted on four wheels (7, 8) designed to operate on either side of the harvest board, possibly in the lateral stock holes (3).

13. A harvester according to claim 12; characterised in that it comprises front wheels (7), adjustable in height using a safety jack (75) connected to an upper and lower stop system (74), connected to the lateral gauge jack (10) of the secondary chassis (6) provided nearby.

14. A harvester according to any of the claims 1 to 13, characterised in that the permanent adjustment means of the picking-up chassis (6) consist of one or several wheel-shaped detectors (48) provided just in front of the cutting blade (12, 12') and operating on the harvest board, whereby the said detectors (48) are each associated with a hydraulic slide distributor (54), in the form of a flow control valve, connected to the jacks (10) which interlock the main chassis (4) and the picking-up chassis (6) at the level of their front section.

15. A harvester according to claim 14, characterised in that it comprises two detectors (48) each associated with a hydraulic slide distributor (54) each controlling one of the lateral jacks (10).

16. A harvester according to any of the claims 14 or 15, characterised in that the hydraulic slide distributors (54) associated with the detector(s) (48) are interconnected with the picking-up chassis (6) and consist of a body (55) fitted with a pressure supply (59) and a return output (60) connected to a pump (61) or to the hydraulic system of the tractive unit, whereas the said supply (59) feeds in parallel one of the chambers (63) of the related double-action jack (10), and the said output (60) feeds in parallel the other chamber (65) of the said jack (10), whereas the body of the distributor (55) is fitted with a slide (56) whose position is adjusted by the related detector (48), whereas the said slide (56) connects the supply (59) and the output (60) of the body of the distributor (55) and adjusts the flow rate in relation to its position.

## Patentansprüche

1. Erntemaschine für Salat von beispielsweise der Art des Feldsalats, enthaltend:
- einen Hauptrahmen (4), der auf Rollorganen (7, 8) montiert und mit Mitteln verbunden ist, die seine Verschiebung entlang des Erntebeetes (1) ermöglichen,
- einen als Pflückerrahmen bezeichneten Nebenrahmen (6), der von dem Hauptrahmen (4) getragen wird, wobei dieser Pflückerrahmen (6) mit einem Schneidmesser (12, 12') versehen ist, das im wesentlichen senkrecht zur Richtung der Vorwärtsbewegung (13) angeordnet ist und mit einer hin- und hergehenden Querbewegung angetrieben wird,
- einen Endlosförderer (16), der aus einem Endlosförderband (24) besteht, das sich in Höhe seines vorderen Teils (22) unmittelbar hinter dem Schneidmesser (12, 12') um einen Säbel (23, 27) und hinten um eine motorisierte Trommel (33) herumschlingt und sich zudem über die gesamte Arbeitsbreite erstreckt,
- und Mittel (18) zur permanenten Einstellung der Positionierung des Pflückerrahmens (6) in bezug auf den Boden (1), und das Schneidmesser (12, 12') in bezug auf das untere Stengelende der zu erntenden Pflanze richtig zu positionieren.

2. Erntemaschine nach Anspruch 1, dadurch gekennzeichnet, daß sie einen Säbel (23) aufweist, der aus einem runden oder halbrunden Teil zum Herumschlingen (25) besteht, dessen Durchmesser in der Größenordnung von 8 bis 10 mm liegt und der mit einem flachen Teil (26) zur Versteifung verbunden ist, der sich nach hinten erstreckt.

3. Erntemaschine nach einem der Ansprüche 1 oder 2, dadurch gekennzeichnet, daß sie einen Säbel (27) aufweist, der aus nebeneinander angeordneten drehbaren runden Teilen (32) besteht, die auf Lagern (31) montiert sind, die mit einem Versteifungsprofil (28) fest verbunden sind, das sich nach hinten erstreckt.

4. Erntemaschine nach einem der Ansprüche 1 bis 3, dadurch gekennzeichnet, daß sie eine Vorrichtung (42) aufweist, die eine seitliche Verlagerung des Förderbandes (24) verhindert und die auf den unteren Trum des Förderbandes (24) unmittelbar hinter dem Endsäbel (23, 27) einwirkt, daß die Vorrichtung (42) aus einer auf Lagern montierten losen Stange (43) besteht, die im wesentlichen parallel zum Säbel (23, 27) auf der ganzen Breite des Endlosförderbandes (24) angeordnet ist, wobei die Position der Stange (43) in Höhe ihrer Lager entlang einer Richtung, die im wesentlichen senkrecht zur Ebene des Förderbandes (24) ist, seitlich einstellbar ist.

5. Erntemaschine nach einem der Ansprüche 1 bis 4, dadurch gekennzeichnet, daß sie eine Antriebstrommel (33) aufweist, die mit seitlichen Wangen (34) in Form von Scheiben oder Kränzen versehen ist, die dafür vorgesehen sind, das Endlosförderband (24) zu führen und es zur Beibehaltung einer korrekten Position, zentriert auf dem Nebenrahmen (6), zu zwingen.

6. Erntemaschine nach einem der Ansprüche 1 bis 5, dadurch gekennzeichnet, daß sie ein System zum automatischen Spannen des Endlosförderbandes (24) aufweist, daß dieses System aus einen, starren Rahmen (38) besteht, der schwenkbar an dem Nehenrahmen (6) angelenkt ist, und daß dieser Rahmen (38) die seitlichen Lager der motorisierten Trommel (33) trägt und einer elastischen Rückstellvorrichtung (40) unterworfen ist, die dafür vorgesehen ist, an der Trommel (33) zu ziehen, um das Förderband (24) zu spannen.

7. Erntemaschine nach einem der Ansprüche 1 bis 6, dadurch gekennzeichnet, daß sie ein Schneidmesser (12, 12') aufweist, dessen Angriffskante (20, 20') schneidend ist und das mit Öffnungen oder Löchern (46) versehen ist.

8. Erntemaschine nach Anspruch 7, dadurch gekennzeichnet, daß sie ein Schneidmesser (12, 12') aufweist, dessen der Schneide (20, 20') gegenüberliegende Kante (21, 21') die Form eines Kammes mit einer Vielzahl mündender Längsöffnungen (46) besitzt.

9. Erntemaschine nach einem der Ansprüche 7 oder 8, dadurch gekennzeichnet, daß sie ein Schneidmesser (12') mit kreisbogenförmigem oder V-förmigem Querschnitt aufweist.

10. Erntemaschine nach einem der Ansprüche 1 bis 9, dadurch gekennzeichnet, daß sie einen Pflückerrahmen (6) aufweist, der hinten mittels eines Kugelgelenks (9) und vorne mittels zweier seitlicher Zylinder (10) mit dem Hauptrahmen (4) verbunden ist.

11. Erntemaschine nach einem der Ansprüche 1 bis 10, dadurch gekennzeichnet, daß sie in Nähe des oder der seitlichen Zylinder (10) wenigstens eine vertikale Gleitfläche (70) zur Führung des Pflückerrahmens (6) aufweist.

12. Erntemaschine nach einem der Ansprüche 1 bis 11, dadurch gekennzeichnet, daß sie einen Hauptrahmen (4) aufweist, der auf vier Rädern (7, 8) montiert ist, die dazu bestimmt sind, sich auf beiden Seiten des abzuerntenden Beetes zu bewegen, gegebenenfalls auf seitlichen Fußwegen (3).

13. Erntemaschine nach Anspruch 12, dadurch gekennzeichnet, daß sie Vorderräder (7) aufweist, die mittels eines Sicherheitszylinders (75) höhenverstellbar sind der mit einem System für die obere und untere Endstellung (74) gekuppelt ist, das mit dem in der Nähe angeordneten seitlichen Einstellzylinder (10) des Nebenrahmens (6) verbunden ist.

14. Erntemaschine nach einem der Ansprüche 1 bis 13, dadurch gekennzeichnet, daß die Mittel zum permanenten Einstellung des Pflückerrahmens (6) aus einem oder mehreren radförmigen Fühlern (48) bestehen, die unmittelbar vor dem Schneidmesser (12, 12') vorgesehen sind und sich in Kontakt mit dem abzuerntenden Beet bewegen, wobei diese Fühler (48) jeweils mit einem hydraulischen Schieberventil (54) in Form eines Durchflußregelventils verbunden sind, das mit den Zylindern (10) verbunden ist, welche den Hauptrahmen (4) und den Pflückerrahmen (6) in Höhe ihres vorderen Teils verbinden.

15. Erntemaschine nach Anspruch 14, dadurch gekennzeichnet, daß sie zwei Fühler (48) aufweist, die jeweils mit einem hydraulischen Schieberventil (54) verbunden sind, das jeweils einen der seitlichen Zylinder (10) steuert.

16. Erntemaschine nach einem der Ansprüche 14 oder 15, dadurch gekennzeichnet, daß die mit dem (den) Fühler(n) 48 verbundenen hydraulischen Schieberventile (54) mit dem Pflückerrahmen (6) fest verbunden sind und aus einem Körper (55) bestehen, der mit einer Druckversorgung (59) und einem Rückleitungsauslaß (60) versehen ist, die mit einer Pumpe (61) oder mit dem hydraulischen System der Zugmaschine verbunden sind, daß die Versorgung (59) parallel eine der Kammern (63) des doppeltwirkenden beigeordneten Zylinders (10) speist und der Auslaß (60) parallel die andere Kammer (65) des Zylinders (10) speist, daß der Körpers des Ventils (55) mit einem Schieber (56) versehen ist, dessen Position von dem beigeordneten Fühler (48) gesteuert wird, und daß der Schieber (56) die Versorgung (59) und den Auslaß (60) des Ventilkörpers (55) verbindet und den Durchfluß des Fluids in Abhängigkeit von seiner Position regelt.
